# EUROPÄISCHE PATENTANMELDUNG

(11) **EP 2 455 630 A2**
(43) Veröffentlichungstag der Anmeldung: **23.05.2012**
(21) Anmeldenummer: 11189684.1
(22) Anmeldetag: 18.11.2011
(51) Int. Cl.: F16C 19/38, F16C 33/76

(54) **Wälzlageranordnung mit einem Radialwellendichtring und Verfahren zu deren Montage**

(30) Priorität: 19.11.2010 DE 102010044173
(71) Anmelder: Aktiebolaget SKF, 41 550 Göteborg (SE)
(72) Erfinder: Gruber, Andreas, 8741 Maria Buch - Feistritz (AT); Kern, Henning, 97422 Schweinfurt (DE); Kern-Trautmann, Andreas, 97230 Estenfeld (DE); Liang, Baozhu, Dr., 97456 Hambach (DE); Seuberling, Mathias, 97633 Großeibstedt (DE)
(74) Vertreter: Schonecke, Mitja

(57) **Zusammenfassung**

Die Erfindung betrifft eine Wälzlageranordnung (1) aufweisend wenigstens ein Wälzlager (3) mit mindestens einem Außenring (5) und mindestens einem Innenring (7a, 7b) und dazwischen angeordneten Wälzkörpern (9), sowie einen Radialwellendichtring (11), der eine dynamische Dichtlippe (13) umfasst, und einen Dichtungshalter (15), der ausgebildet ist, den Radialwellendichtring (11) an dem Wälzlager (3) festzulegen, wobei der Dichtungshalter (15) ausgebildet ist, den Radialwellendichtring (11) unter Belassen eines radialen Umfangsspaltes (S) zwischen einem Außenumfang (A) des Radialwellendichtrings (11) und dem Dichtungshalter (15) von gegenüberliegenden Seiten des Radialwellendichtrings (11) axial zu halten. Die Erfindung betrifft außerdem ein diesbezügliches Verfahren zur Montage einer solchen Wälzlageranordnung (1).

## Beschreibung

Die Erfindung betrifft eine Wälzlageranordnung aufweisend wenigstens ein Wälzlager mit mindestens einem Außenring und mindestens einem Innenring und dazwischen angeordneten Wälzkörpern, sowie einen Radialwellendichtring, der eine dynamische Dichtlippe umfasst, und einen Dichtungshalter, der ausgebildet ist, den Radialwellendichtring an dem Wälzlager festzulegen. Die Erfindung betrifft außerdem ein diesbezügliches Verfahren zur Montage einer solchen Wälzlageranordnung.

Die DE 10 2005 001 940 A1 zeigt eine Wälzlageranordnung mit einem Wälzlager, das zwei Innenringe, einen Außenring und Wälzkörper aufweist. Das Wälzlager ist mittels dynamischer Abdichtungselemente abgedichtet.

Aufgabe der Erfindung ist es, eine durch wenigstens einen Radialwellendichtring abgedichtete Wälzlageranordnung mit einer verbesserten Dichtwirkung zu schaffen.

Die Aufgabe der Erfindung wird gelöst durch eine Wälzlageranordnung aufweisend wenigstens ein Wälzlager mit mindestens einem Außenring und mindestens einem Innenring und dazwischen angeordneten Wälzkörpern, sowie einen Radialwellendichtring, der eine dynamische Dichtlippe umfasst, und einen Dichtungshalter, der ausgebildet ist, den Radialwellendichtring an dem Wälzlager festzulegen, bei der der Dichtungshalter ausgebildet ist, den Radialwellendichtring unter Belassen eines radialen Umfangsspaltes zwischen einem Außenumfang des Radialwellendichtrings und dem Dichtungshalter von gegenüberliegenden Seiten des Radialwellendichtrings axial zu halten.

Indem die Wälzlageranordnung zwischen einem Außenumfang des Radialwellendichtrings und dem Dichtungshalter einen radialen Umfangsspalt ausbildet, kann sich die dynamische Dichtlippe, sobald sie auf eine Welle oder einem Innenring des Wälzlagers aufgezogen ist, selbsttätig zentrieren. Die dynamische Dichtlippe ist dabei axial noch nicht fixiert und kann aufgrund des radialen Umfangsspalts sich bezüglich des Dichtungshalters bewegen bzw. ausrichten. Die dynamische Dichtlippe ist dann unter gleichmäßiger Spannungsverteilung auf der Welle oder dem Innenring des Wälzlagers ausgerichtet. Erst anschließend erfolgt eine axiale Fixierung der dynamischen Dichtlippe, indem sie durch den Dichtungshalter axial eingespannt wird.

Der Radialwellendichtring kann einen die Dichtlippe aufweisenden Elastomer-Ring mit einer äußeren Mantelwand aufweisen, an der ein bandförmiger um den Elastomer-Ring umlaufender Metallring anliegt. Der Elastomer-Ring bildet dabei die dynamische Dichtlippe aus. Um die dynamische Dichtlippe hinsichtlich ihrer Rundheit zu stabilisieren und/oder eine gleichmäßig über den Umfang wirkende radial nach innen gerichtete Spannkraft zu erzeugen, kann die dynamische Dichtlippe bzw. der Elastomer-Ring den bandförmigen Metallring aufweisen.

Der Elastomer-Ring kann von der äußeren Mantelwand vorspringende Halteabschnitte aufweisen, welche den Metallring von zwei gegenüberliegenden axialen Stirnseiten umfassen. Die von der äußeren Mantelwand vorspringenden Halteabschnitte können ein axiales Abrutschen des Metallrings von der Mantelwand der dynamische Dichtlippe bzw. des Elastomer-Rings verhindern. Die von der äußeren Mantelwand vorspringenden Halteabschnitte können den Metallring in seiner richtigen Position halten. Die von der äußeren Mantelwand vorspringenden Halteabschnitte können einen Schutz der axialen Stirnseiten des Metallrings darstellen.

In einer Ausführungsform der Erfindung kann der Elastomer-Ring zwei axial gegenüberliegende ebene Ringstirnwände aufweisen. Wenn der Elastomer-Ring zwei axial gegenüberliegende ebene Ringstirnwände aufweist, können zwei gegenüberliegende ringscheibenförmige Spannbacken des Dichtungshalters plan, d.h. flächig an den Ringstirnwänden des Elastomer-Rings anliegen und diesen reibschlüssig und/oder kraftschlüssig in Position halten, insbesondere reibschlüssig und/oder kraftschlüssig ein Verdrehen des Elastomer-Rings verhindern.

In allen erfindungsgemäßen Ausführungsformen kann der Dichtungshalter zum axialen Halten des Radialwellendichtrings an gegenüberliegenden Seiten, eine Fixiereinrichtung aufweisen, welche den Radialwellendichtrings axial fixiert. Mittels der Fixiereinrichtung kann der Radialwellendichtring bzw. die dynamische Dichtlippe bzw. der Elastomer-Ring axial in Position gehalten und gegen Verdrehen gesichert werden. Ein solches Sichern gegen Verdrehen und/oder axiales Verschieben kann erfolgen, nachdem die dynamische Dichtlippe bzw. der Elastomer-Ring sich selbsttätig auf der Welle bzw. dem Innenring des Wälzlagers ausgerichtet hat.

Die Fixiereinrichtung kann zwei ringscheibenförmige Spannbacken aufweisen, welche den Radialwellendichtring an seinen axial gegenüberliegenden, insbesondere ebenen Ringstirnwänden in axialer Richtung einspannen. Die zwei ringscheibenförmigen Spannbacken können dabei axial gegeneinander verstellbar ausgebildet sein.

Die eine ringscheibenförmige Spannbacke kann fest mit einem Tragring des Dichtungshalters verbunden sein und die zweite ringscheibenförmige Spannbacke lösbar an dem Tragring oder einem mit dem Tragring verbundenen Befestigungsringabschnitt des Dichtungshalters befestigt sein. Mittels der zweiten lösbaren ringscheibenförmigen Spannback kann die dynamische Dichtlippe bzw. der Elastomer-Ring gegen die feststehende erste ringscheibenförmige Spannbacke gedrückt und dadurch fixiert werden.

In allen erfindungsgemäßen Ausgestaltungen kann der Dichtungshalter einen ringförmigen Flansch, der mit dem Außenring des Wälzlagers verbunden ist, eine mit dem Flansch fest verbundene erste ringscheibenförmige Spannbacke und einen Befestigungsringabschnitt aufweisen, wobei an dem Befestigungsringabschnitt eine zweite ringscheibenförmige Spannbacke, insbesondere mittels Schrauben befestigt ist, welche den Radialwellendichtring allein an seinen gegenüberliegenden, insbesondere ebenen Ringstirnwänden axial gegen die feststehende erste ringscheibenförmige Spannbacke drückt.

Die Aufgabe der Erfindung wird außerdem gelöst durch ein Verfahren zur Montage einer Wälzlageranordnung mit den Schritten:
- Bereitstellen eines Wälzlagers mit mindestens einem Außenring und mindestens einem Innenring und dazwischen angeordneten Wälzkörpern;
- Befestigen eines Dichtungshalters mit einem ringförmigen Flansch, der eine erste ringscheibenförmige Spannbacke und einen Befestigungsringabschnitt aufweist, an dem Wälzlager;
- Aufschieben eines Radialwellendichtrings, der eine dynamische Dichtlippe aufweist, auf eine der dynamischen Dichtlippe zugeordnete Lauffläche;
- Montieren einer zweiten ringscheibenförmige Spannbacke an den Befestigungsringabschnitt des Dichtungshalters, derart, dass der Radialwellendichtring zwischen der ersten ringscheibenförmigen Spannbacke und der zweiten ringscheibenförmigen Spannbacke angeordnet ist;
- Anziehen von Befestigungsmitteln, welche die zweite ringscheibenförmige Spannbacke mit dem Befestigungsringabschnitt des Dichtungshalters verbinden, um den Radialwellendichtring zwischen der ersten ringscheibenförmigen Spannbacke und der zweiten ringscheibenförmigen Spannbacke axial einzuspannen.

Das erfindungsgemäße Verfahren zur Montage einer Wälzlageranordnung kann die weiteren Schritte aufweisen:
- Befestigen des Dichtungshalters mit dem ringförmigen Flansch, der die erste ringscheibenförmige Spannbacke und den Befestigungsringabschnitt aufweist, an dem Außenring des Wälzlagers;
- Aufschieben des Radialwellendichtrings, der die dynamische Dichtlippe aufweist, auf eine der dynamischen Dichtlippe zugeordnete äußere Mantelwand des Innenrings des Wälzlagers;

Das erfindungsgemäße Verfahren zur Montage einer Wälzlageranordnung kann den weiteren Schritt aufweisen:
- Anlegen eines bandförmigen Metallrings an eine äußere Mantelwand eines die Dichtlippe aufweisenden Elastomer-Rings des Radialwellendichtrings derart, dass von der äußeren Mantelwand des Elastomer-Rings vorspringende Halteabschnitte den bandförmigen Metallring von zwei gegenüberliegenden axialen Stirnseiten umfassen.

Zusammenfassend stellt die Erfindung mit anderen Worten eine Wälzlageranordnung und ein Verfahren zur Montage einer Wälzlageranordnung bereit, bei der ein Radialwellendichtring derart montiert ist bzw. montiert wird, dass die Dichtung, d.h. die dynamische Dichtlippe mit einem Stahlband versehen und beispielsweise auf einen Lagerinnenring des Wälzlagers, insbesondere einem Innenring vormontiert, d.h. geschoben wird.

Die Dichtung, d.h. die dynamische Dichtlippe richtet sich dabei selbständig aus. Erst nachdem die Ausrichtung erfolgt ist, wird die Dichtung mit einem Dichtungsträger in ihrer Position axial fixiert. Die radiale Ausrichtung der Dichtung erfolgt dabei nicht mehr durch den Dichtungsträger sondern durch das um die Dichtung gespannte Stahlband.

Durch die erfindungsgemäße Wälzlageranordnung und das erfindungsgemäße Verfahren zur Montage einer Wälzlageranordnung kann eine größtmögliche Dichtwirkung bei geringster Reibung erreicht werden. Die Toleranzkette für den Dichtungseinbau wird auf ein Minimum reduziert. Die radialen Toleranzen des Dichtungsträgers bedingt durch Fertigung und Montage wirken sich dabei nicht auf die Einbaulage der Dichtung aus bzw. wirken sich dabei nicht so stark auf die Einbaulage der Dichtung aus.

Bisher erfolgt die Abdichtung mit einem Radialwellendichtring, der über einen massiven Dichtungsträger am Außenring des Wälzlagers befestigt und gehalten ist. Fertigungstoleranzen und Handhabung spielen jedoch vor allem bei Großlagern eine besondere Rolle.

Zwei Ausführungsbeispiele der Erfindung sind exemplarisch in den beigefügten schematischen Zeichnungen dargestellt. Es zeigen:
- Fig. 1: eine Teilschnittansicht einer ersten beispielhaften Ausführung einer erfindungsgemäßen Wälzlageranordnung;
- Fig. 2: ein vergrößerter Ausschnitt aus der Teilschnittansicht gemäß Fig. 1 im Bereich eines erfindungsgemäßen Dichtungshalters;
- Fig. 3: eine zweite beispielhafte Ausführung einer erfindungsgemäßen Wälzlageranordnung mit einem gegenüber Fig. 2 abgewandelten erfindungsgemäßen Dichtungshalter.

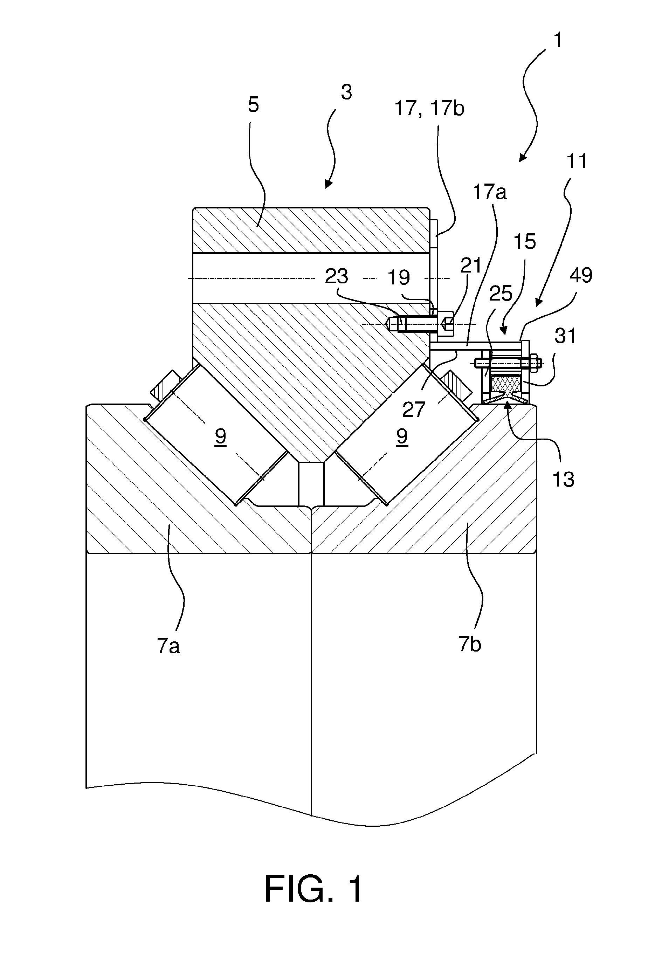

Die in Fig. 1 dargestellte Wälzlageranordnung 1 weist ein zweireihiges Wälzlager 3 mit einem Außenring 5 und zwei Innenringe 7a, 7b auf. Zwischen dem Außenring 5 und den zwei Innenringen 7a, 7b sind Wälzkörper 9 in Form von Rollen, insbesondere Kegelrollen oder Zylinderrollen angeordnet. Die Wälzlageranordnung 1 weist einen Radialwellendichtring 11 auf. Der Radialwellendichtring 11 weist eine dynamische Dichtlippe 13 und einen Dichtungshalter 15 auf.

Der Dichtungshalter 15 weist einen ringförmigen Flansch 17 auf, der mit dem Außenring 5 des Wälzlagers 3 verbunden ist. Der Flansch 17 besteht im dargestellten Ausführungsbeispiel aus einem Tragring 17a und einem Flanschabschnitt 17b. Der Flanschabschnitt 17b weist mehrere über den Umfang in gleichmäßigen Abständen verteilte Bohrungen 19 auf, durch welche Flanschschrauben 21 gesteckt sind, die in zugeordnete Innengewinde 23 des Außenrings 5 eingeschraubt sind.

Eine erste ringscheibenförmige Spannbacke 25 ist mit dem Tragring 17a fest verbundene. Die erste ringscheibenförmige Spannbacke 25 ist dazu an einer inneren Mantelwand 27 des rohrförmigen Tragrings 17a befestigt und erstreckt sich radial nach innen. Eine Befestigung der ersten ringscheibenförmigen Spannbacke 25 an dem Tragring 17a kann beispielsweise im Rahmen einer Stahlkonstruktion durch Schweißen erfolgen.

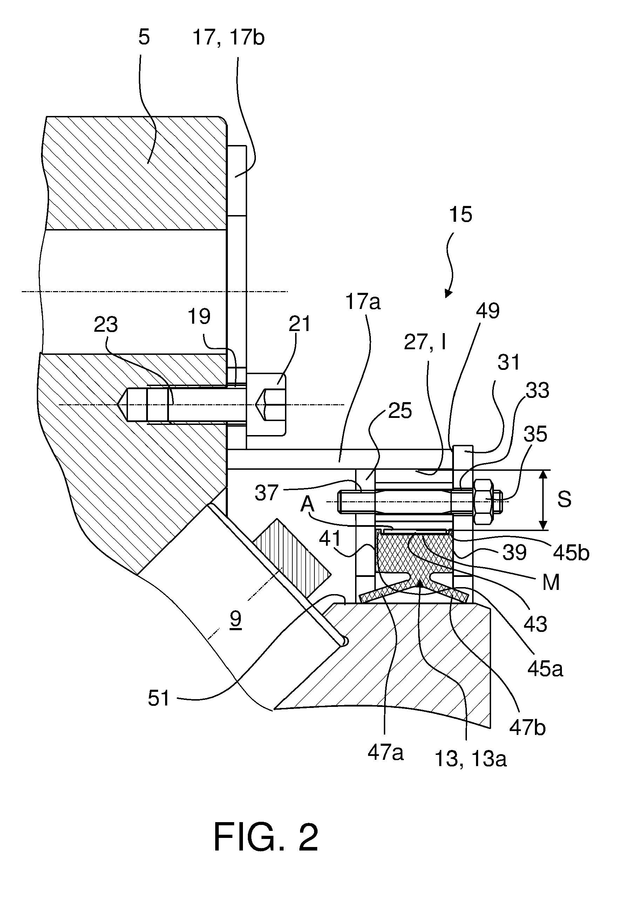

Wie in der vergrößerten Darstellung gemäß Fig. 2 zu sehen, liegt an einer äußeren Ringstimwand 49 des Tragrings 17a eine zweite ringscheibenförmige Spannbacke 31 an. Die zweite ringscheibenförmige Spannbacke 31 kann entlang des Umfangs aus mehreren Segmenten bestehen, die getrennt voneinander montierbar sind. Alternativ kann die Spannbacke 31 einstückig ausgeführt sein. Sie weist mehrere über den Umfang in gleichmäßigen Abständen verteilte Bohrungen 33 auf, durch welche Spannschrauben 35 gesteckt sind, die in zugeordnete Innengewinde 37 der ersten ringscheibenförmigen Spannbacke 25 eingeschraubt sind. Mittel der Spannschrauben 35 werden die erste ringscheibenförmige Spannbacke 25 und die zweite ringscheibenförmige Spannbacke 31 axial gegeneinander gezogen, bis die dynamische Dichtlippe 13 dazwischen eingeklemmt ist und die zweite ringscheibenförmige Spannbacke 31 an der äußeren Ringstimwand 49 des Tragrings 17a bündig anliegt.

Durch ein Spannen der Spannschrauben 35 wird also die lösbare zweite ringscheibenförmige Spannbacke 31 axial gegen eine erste Ringstimwand 39 der dynamischen Dichtlippe 13 gedrückt. Durch weiteres Spannen der Spannschrauben 35 wird die dynamische Dichtlippe 13 von der zweiten ringscheibenförmigen Spannbacke 31 mit der zweiten Ringstimwand 41 der dynamischen Dichtlippe 13 kontaktierend gegen die starre erste ringscheibenförmige Spannbacke 25 gedrückt. So wird allein an den gegenüberliegenden ebenen Ringstirnwänden 39, 41 die dynamische Dichtlippe 13 axial fixiert. Der Dichtungshalter 15, welcher den ringförmigen Flansch 17 aufweist, dient so zum axialen Halten des Radialwellendichtrings 11 bzw. der dynamische Dichtlippe 13 an ihren gegenüberliegenden Seiten. Der ringförmige Flansch 17 bildet dabei zusammen mit seiner ersten ringscheibenförmigen Spannbacke 25 und der zweiten ringscheibenförmigen Spannbacke 31 eine Fixiereinrichtung, welche den Radialwellendichtring 11 axial fixiert.

Die erste ringscheibenförmige Spannbacke 25 ist fest mit dem Tragring 17a des Dichtungshalters 15 verbunden und die zweite ringscheibenförmige Spannbacke 31 ist lösbar an dem Tragring 17a befestigt. Der Dichtungshalter 15 ist dadurch ausgebildet, den Radialwellendichtring 11, im dargestellten Ausführungsbeispiel die dynamische Dichtlippe 13, unter Belassen eines radialen Umfangsspaltes S zwischen einem Außenumfang A des Radialwellendichtrings 11 und einem Innenumfang I des Dichtungshalters 15 von gegenüberliegenden Seiten des Radialwellendichtrings 11, im dargestellten Ausführungsbeispiel der dynamischen Dichtlippe 13, axial zu halten.

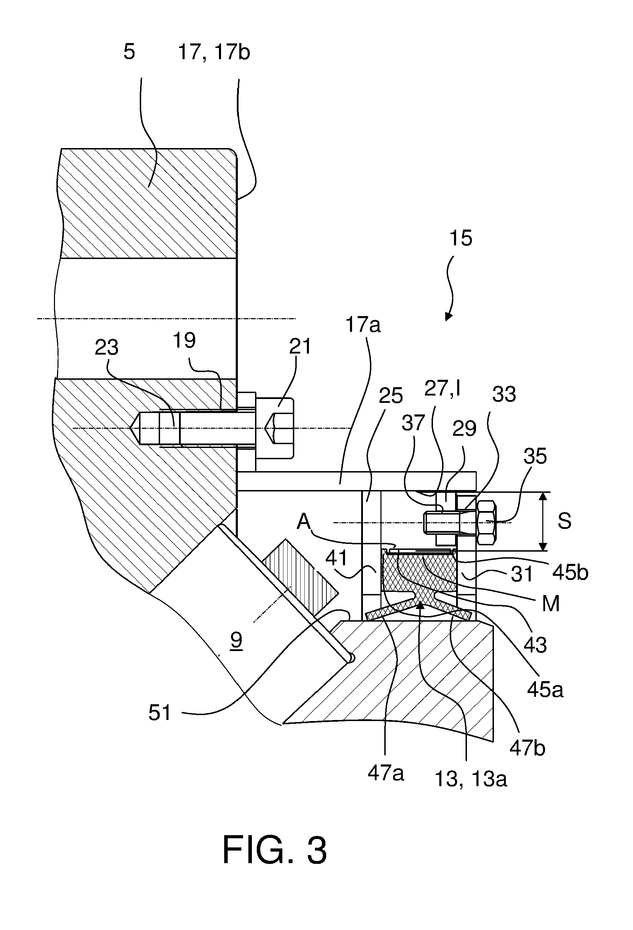

Der Radialwellendichtring 11 bzw. die dynamische Dichtlippe 13 kann aus einem Elastomer-Ring 13a gebildet werden, der eine äußere Mantelwand M aufweist, an der ein bandförmiger um den Elastomer-Ring 13a umlaufender Metallring 43 anliegt. Zum Halten des umlaufenden Metallrings 43 weist in den dargestellten Ausführungsbeispielen nach Fig. 2 und Fig. 3 der Elastomer-Ring 13a von der äußeren Mantelwand M vorspringende Halteabschnitte 45a, 45b auf, welche den Metallring 43 von zwei gegenüberliegenden axialen Stirnseiten umfassen. Alternativ zu einem Metallring 43 lassen sich auch Ringe aus kohlenstofffaserverstärktem oder glasfaserverstärktem Kunststoff (CFK bzw. GFK) oder ähnlichen Materialien einsetzen.

Die Dichtlippe 13 bzw. der Elastomer-Ring 13a weist wenigstens eine Dichtungskante, vorzugsweise zwei Dichtungskanten 47a, 47b auf. In dargestellten Ausführungsbeispielen nach Fig. 2 und Fig. 3 ist der Dichtungshalter 15 an dem Außenring 5 festgelegt und die Dichtungskanten 47a, 47b der dynamischen Dichtlippe 13 gleiten auf einer äußeren Mantelwand 51 des Innenrings 7b.

In der zweiten beispielhaften Ausführung gemäß Fig. 3 ist die erfindungsgemäße Wälzlageranordnung gegenüber der Ausführung nach Fig. 2 mit einem abgewandelten erfindungsgemäßen Dichtungshalter versehen. Der Tragring 17a weist dabei einen Befestigungsringabschnitt 29 auf. Der Befestigungsringabschnitt 29 ist mit dem Tragring 17a fest verbunden. Der Befestigungsringabschnitt 29 ist dazu an der inneren Mantelwand 27 des Tragrings 17a befestigt und erstreckt sich radial nach innen, jedoch nur bis zu einem größeren Innendurchmesser als der Innendurchmesser der ersten ringscheibenförmigen Spannbacke 25. Eine Befestigung des Befestigungsringabschnitts 29 an dem Tragring 17a kann beispielsweise im Rahmen einer Stahlkonstruktion durch Schweißen erfolgen.

An dem Befestigungsringabschnitt 29 ist die zweite ringscheibenförmige Spannbacke 31 befestigt. Die zweite ringscheibenförmige Spannbacke 31 weist mehrere über den Umfang in gleichmäßigen Abständen verteilte Bohrungen 33 auf, durch welche Spannschrauben 35 gesteckt sind, die in zugeordnete Innengewinde 37 des Befestigungsringabschnitts 29 eingeschraubt sind.

Der Radialwellendichtring 11 bzw. die dynamische Dichtlippe 13 kann auch in der zweiten Ausführung aus einem Elastomer-Ring 13a gebildet werden, der eine äußere Mantelwand M aufweist, an der ein bandförmiger um den Elastomer-Ring 13a umlaufender Metallring 43 anliegt. Zum Halten des umlaufenden Metallrings 43 weist in den dargestellten Ausführungsbeispielen nach Fig. 2 und Fig. 3 der Elastomer-Ring 13a von der äußeren Mantelwand M vorspringende Halteabschnitte 45a, 45b auf, welche den Metallring 43 von zwei gegenüberliegenden axialen Stirnseiten umfassen.

Die Dichtlippe 13 bzw. der Elastomer-Ring 13a weist auch in der zweiten Ausführung wenigstens eine Dichtungskante 47a, 47b auf. Auch hier ist der Dichtungshalter 15 an dem Außenring 5 festgelegt und die Dichtungskanten 47a, 47b der dynamischen Dichtlippe 13 gleiten auf einer äußeren Mantelwand 51 des Innenrings 7b.

### Bezugszeichenliste

- 1: Wälzlageranordnung
- 3: Wälzlager
- 5: Außenring
- 7a, 7b: Innenringe
- 9: Wälzkörper
- 11: Radialwellendichtring
- 13: dynamische Dichtlippe
- 13 a: Elastomer-Ring
- 15: Dichtungshalter
- 17: Flansch
- 17a: Tragring
- 17b: Flanschabschnitt
- 19: Bohrungen
- 21: Flanschschrauben
- 23: Innengewinde
- 25: erste ringscheibenförmige Spannbacke
- 27: innere Mantelwand
- 29: Befestigungsringabschnitt
- 31: zweite ringscheibenförmige Spannbacke
- 33: Bohrungen
- 35: Spannschrauben
- 37: Innengewinde
- 39: erste Ringstimwand
- 41: zweite Ringstimwand
- 43: Metallring
- 45a, 45b: Halteabschnitte
- 47a, 47b: Dichtungskanten
- 49: äußere Ringstimwand
- S: Umfangsspalt
- A: Außenumfang
- I: Innenumfang
- M: Mantelwand

## Patentansprüche

1. Wälzlageranordnung aufweisend wenigstens ein Wälzlager (3) mit mindestens einem Außenring (5) und mindestens einem Innenring (7a, 7b) und dazwischen angeordneten Wälzkörpern (9), sowie einen Radialwellendichtring (11), der eine dynamische Dichtlippe (13) umfasst, und einen Dichtungshalter (15), der ausgebildet ist, den Radialwellendichtring (11) an dem Wälzlager (3) festzulegen, **dadurch gekennzeichnet, dass** der Dichtungshalter (15) ausgebildet ist, den Radialwellendichtring (11) unter Belassen eines radialen Umfangsspaltes (S) zwischen einem Außenumfang (A) des Radialwellendichtrings (11) und dem Dichtungshalter (15) von gegenüberliegenden Seiten des Radialwellendichtrings (11) axial zu halten.

2. Wälzlageranordnung nach Anspruch 1, **dadurch gekennzeichnet, dass** der Radialwellendichtring (11) einen die Dichtlippe (13) aufweisenden Elastomer-Ring (13a) mit einer äußeren Mantelwand (M) aufweist, an der ein bandförmiger um den Elastomer-Ring (13a) umlaufender Metallring (43) anliegt.

3. Wälzlageranordnung nach Anspruch 2, **dadurch gekennzeichnet, dass** der Elastomer-Ring (13a) von der äußeren Mantelwand (M) vorspringende Halteabschnitte (45a, 45b) aufweist, welche den Metallring (43) von zwei gegenüberliegenden axialen Stirnseiten umfassen.

4. Wälzlageranordnung nach einem der Ansprüche 1 bis 3, **dadurch gekennzeichnet, dass** der Dichtungshalter (15) zum axialen Halten des Radialwellendichtrings (11) an gegenüberliegenden Seiten eine Fixiereinrichtung aufweist, welche den Radialwellendichtrings (11) axial fixiert.

5. Wälzlageranordnung nach Anspruch 4, **dadurch gekennzeichnet, dass** die Fixiereinrichtung zwei ringscheibenförmige Spannbacken (25, 31) aufweist, welche den Radialwellendichtring (11) an seinen axial gegenüberliegenden, insbesondere ebenen Ringstirnwänden in axialer Richtung einspannen.

6. Wälzlageranordnung nach Anspruch 5, **dadurch gekennzeichnet, dass** die eine ringscheibenförmige Spannbacke (25) fest mit einem Tragring (17a) des Dichtungshalters (15) verbunden ist und die zweite ringscheibenförmige Spannbacke (31) lösbar an dem Tragring (17a) oder einem mit dem Tragring (17a) verbundenen Befestigungsringabschnitt (29) des Dichtungshalters (15) befestigt ist.

7. Wälzlageranordnung nach einem der Ansprüche 1 bis 6, **dadurch gekennzeichnet, dass** der Dichtungshalter (15) einen ringförmigen Flansch (17), der mit dem Außenring (5) des Wälzlagers (3) verbunden ist, eine mit dem Flansch (17) fest verbundene erste ringscheibenförmige Spannbacke (25) und einen Befestigungsringabschnitt (29) aufweist, wobei an dem Befestigungsringabschnitt (29) eine zweite ringscheibenförmige Spannbacke (31), insbesondere mittels Spannschrauben (35) befestigt ist, welche den Radialwellendichtring (11), insbesondere die dynamische Dichtlippe (13) allein an seinen gegenüberliegenden, insbesondere ebenen Ringstirnwänden axial gegen die feststehende erste ringscheibenförmige Spannbacke (25) drückt.

8. Verfahren zur Montage einer Wälzlageranordnung (1) mit den Schritten:
- Bereitstellen eines Wälzlagers (3) mit mindestens einem Außenring (5) und mindestens einem Innenring (7a, 7b) und dazwischen angeordneten Wälzkörpern (9);
- Befestigen eines Dichtungshalters (15) mit einem ringförmigen Flansch (17), der eine erste ringscheibenförmige Spannbacke (25) und einen Befestigungsringabschnitt (29) aufweist, an dem Wälzlager (3);
- Aufschieben eines Radialwellendichtrings (11), der eine dynamische Dichtlippe (13) aufweist, auf eine der dynamischen Dichtlippe (13) zugeordnete Lauffläche;
- Montieren einer zweiten ringscheibenförmige Spannbacke (31) an den Befestigungsringabschnitt (29) des Dichtungshalters (15), derart, dass der Radialwellendichtring (11) zwischen der ersten ringscheibenförmigen Spannbacke (25) und der zweiten ringscheibenförmigen Spannbacke (31) angeordnet ist;
- Anziehen von Befestigungsmitteln, welche die zweite ringscheibenförmige Spannbacke (31) mit dem Befestigungsringabschnitt (29) des Dichtungshalters (15) verbinden, um den Radialwellendichtring (11) zwischen der ersten ringscheibenförmigen Spannbacke (25) und der zweiten ringscheibenförmigen Spannbacke (31) axial einzuspannen.

9. Verfahren zur Montage einer Wälzlageranordnung nach Anspruch 8, aufweisend die Schritte:
- Befestigen des Dichtungshalters (15) mit dem ringförmigen Flansch (17), der die erste ringscheibenförmige Spannbacke (25) und den Befestigungsringabschnitt (29) aufweist, an dem Außenring (5) des Wälzlagers (3);
- Aufschieben des Radialwellendichtrings (11), der die dynamische Dichtlippe (13) aufweist, auf eine der dynamischen Dichtlippe (13) zugeordnete äußere Mantelwand des Innenrings (7a, 7b) des Wälzlagers (3);

10. Verfahren zur Montage einer Wälzlageranordnung nach Anspruch 8 oder 9, aufweisend den Schritt:
- Anlegen eines bandförmigen Metallrings (43) an eine äußere Mantelwand (M) eines die Dichtlippe (13) aufweisenden Elastomer-Rings (13a) des Radialwellendichtrings (11) derart, dass von der äußeren Mantelwand (M) des Elastomer-Rings (13a) vorspringende Halteabschnitte (45a, 45b) den bandförmigen Metallring (43) von zwei gegenüberliegenden axialen Stirnseiten umfassen.
